# EUROPEAN PATENT SPECIFICATION

(11) **EP 2 044 748 B1**
(45) Date of publication and mention of the grant of the patent: **30.01.2013**
(21) Application number: 07721833.7
(22) Date of filing: 30.05.2007
(51) Int. Cl.: H04L 29/06

(54) **METHOD OF REMOTE AUTHENTICATION OF THE TELEPHONE NETWORK SUBSCRIBER**
VERFAHREN ZUR FERNAUTHENTIFIKATION DES TELEFONNETZ-TEILNEHMERS
PROCÉDÉ D'AUTHENTIFICATION À DISTANCE DE L'ABONNÉ AU RÉSEAU TÉLÉPHONIQUE

(30) Priority: 24.07.2006 CZ 20060478
(43) Date of publication of application: 08.04.2009
(73) Proprietor: Monet+, a.s., 763 14 Zlin, Stipa (CZ)
(72) Inventor: ENDRYS, Bretislav, 760 01 Zlin (CZ)
(74) Representative: Andera, Jiri
(86) International application number: PCT/CZ2007/000044
(87) International publication number: WO 2008/011837

(56) References cited:
- WO-A-2006/042469
- US-A1- 2006 069 916

## Description

### Technical Field

The invention relates to remote authentication of mobile telephone network subscriber which is based upon employement of technical features of mobile telephony networks and implemented cryptography.

### Background Art

Authentication, i.e. client's identity verification, is carried out in telephone networks in different ways which employ ciphered access paswords or other means of identification. The methods of subscriber's identity verification available in the existing network of mobile operators are based upon cryptographic algorithms with limited resistance against cryptographic brute-force attack, therefore they are little reliable. These methods are used for mobile phone sim card's identity verification, for instance. In addition, this method requires cryptographic keys to be in the ownership of the operator, they cannot be used for needs of other entities requiring the caller's identity verification.

Other solutions available up to now do not perform caller's identity authentication until the connection between the calling and the called parties has been established, and they use the established communication channel for this purpose. The verification methods themselves are based upon the knowledge of a secret password, which necessarily requires sharing a secret between the operator, i.e. the entity requiring identity authentication, and the subscriber. Another method of the subscriber's identity verification employs a one-time password computed with a cryptographic method using additional technical equipment in the client's possession.

The document WO 2006/042469 , 27 April 2006 (2006-04-27) describes a dynamic password authentication method to allow a user login a network system via a computer to access application services. The technology proposed in the document proposes the authentication of a user already connected to a mobile network but wishing to access high security services.

### Disclosure of the invention

The proposed solution enables automated authentication of the caller, executed by transmitting specific caller's data to the called information system (VIS). The key features of the solution include the ability to generate specific data, such as authentication cryptogram, a one-time password (DTA), etc. in a suitable component of a telephone set, e.g. in the SIM card (Subscriber identification Module), and to add such data to the other data participating in the establishment of the required connection. At a suitable phase/place of connection request processing, i.e. prior to the establishment of the connection with the called information system (VIS), an automated evaluation of an identification cryptogram which has been created as a one-time password (DTA) is carried out. This evaluation is then used to verify the caller's identity arid the result is used by the logic establishing the connection.

The process of remote authentication of telephone network subscriber's identity utilizes the cryptographic process. In this method both the subscriber identifier and an identification cryptogram, comprising of specific data generated as a one-time password are transmitted in the operator's network and the key to generate such data does not have to be in the ownership of the network operator. The advantage of the described method is that the telephone set generates a one-time password representing an identification cryptogram, the one-time password is added to the data participating in the establishment of the connection and at a place where the connection request is processed the one-time password is evaluated as part of connection request processing prior to the establishment of the connection with the called information system, thus the client's identity is verified and the authentication result is used to decide whether to establish the connection.

In the proposed solution the subscriber's identity verification is forced for services which are provided via communication channels. Other advantages include that authentication does not have to be carried out on the application level, the throughput of authentication is increased, and with voice channels the operators are relieved from verbally performed methods of authentication.

### Modes for Carrying Out the Invention

According to the invention, remote authentication of the subscriber's identity is performed using specific data generated as a one-time password (DTA) for the needs of the called information system (VIS).

The called information system (VIS) can be represented e.g. by an automated system or by an operator communicating with the calling voice channel.

The subscriber's identity is defined in the operator's network by the identifier, e.g. by the number of the mobile subscriber (MSISDN), and this value is commonly transmitted in the operator's network during the connection establishment.

A one-time password (DTA) is cryptographically computed from the identifier (MSISDN) in the SIM module (Subscriber Identification Module). The one-time password (DTA) is transmitted during the connection establishment as it becomes part of the called number. Both the value of the identifier (MSISDN) and the specific data generated as the one-time password (DTA) are transmitted to the HSM module (Host Security Module) at a place which is equipped with the identity verification logic, e.g. a private branch exchange of the called information system (VIS). This HSM module verifies the validity of the one-time password (DTA), which is being transmitted, and thus the caller's identity. After the caller's (subscriber's) identity verification has been carried out, the connection with the called information system (VIS) is completed by connecting the communication channel.

After the connection has been set up, the called application, representing the called information system (VIS), does not have to carry out any other authentication of the caller and can use the result of the authentication which was performed automatically during the connection establishment.

Generating a specific one-time password (DTA) includes specific PIN enforcement, thus subsriber-SIM authentication is performed.

Using sufficiently secure cryptographic algorithms with a corresponding key length is prerequisite.

### Industrial applicability

According to the proposed invention remote authentication of the caller's identity may be utilized repeatedly in an industrial way and it can be used in applications requiring authentication, i.e. client's identity verification with a higher degree of security than the security provided by current technologies of the operator's network.

## Claims

1. Method of remote authentication of telephone network subscriber's identity, using a cryptographic method, during which both the subscriber identifier and an identification cryptogram, comprising of specific data generated as a one-time password are transmitted in the operator's network, and the key to generate such data does not have to be in the ownership of the network operator, generating an one-time password representing an identification cryptogram in the telephone set, **characterized by** adding this one-time password to the called number and thus the one-time password becomes a part of the called number, and at a place where the connection request is processed the one-time password is extracted from the called number and evaluated as a part of connection request processing prior to the establishment of the connection with the called number, thus the client's identity is verified and the authentication result is used to decide whether to complete the connection establishment.

## Patentansprüche

1. Verfahren zur Fernüberprüfung der Identität von Telefonnetzteilnehmern mithilfe eines kryptographischen Verfahrens, währenddessen sowohl die Teilnehmerkennung als auch ein Identifizierungs-Kryptogramm, welches aus spezifischen Daten besteht, die als einmaliges Passwort erzeugt werden, im Netzwerk des Betreibers übermittelt werden, wobei sich der Schlüssel zur Erzeugung solcher Daten nicht im Besitz des Betreibers des Netzwerkes befinden muss, wobei ein einmaliges Passwort erzeugt wird, das ein Identifizierungs-Kryptogramm im Telefonapparat darstellt, **dadurch gekennzeichnet, dass** dieses einmalige Passwort zu der angerufenen Nummer hinzugefügt wird und daher das einmalige Passwort Teil der angerufenen Nummer wird, und das einmalige Passwort an der Stelle, wo die Verbindungsanfrage verarbeitet wird, aus der angerufenen Nummer entnommen wird und als Teil der Verarbeitung der Verbindungsanfrage ausgewertet, bevor die Verbindung mit der angerufenen Nummer hergestellt wird, also die Identität des Teilnehmers überprüft wird und das Überprüfungsergebnis dafür verwendet wird, zu entscheiden, ob der Verbindungsaufbau abgeschlossen wird.

## Revendications

1. Procédé d'authentification à distance de l'identité d'abonné du réseau téléphonique, en utilisant un procédé cryptographique, au cours duquel à la fois l'identificateur d'abonné et un cryptogramme d'identification, comprenant des données spécifiques générées comme un mot de passe unique sont transmis dans le réseau de l'opérateur, et la clé pour générer une telle donnée ne doit pas être dans la possession de l'opérateur de réseau, en générant un mot de passe unique représentant un cryptogramme d'identification dans l'appareil téléphonique, **caractérisé par** l'adjonction de ce mot de passe unique au numéro appelé et donc le mot de passe unique devient une partie du numéro appelé, et à l'endroit où la demande de connexion est traitée le mot de passe unique est extrait du numéro appelé et évalué dans le cadre du traitement de la demande de connexion avant l'établissement de la connexion avec le numéro appelé, ainsi l'identité du client est vérifiée et le résultat d'authentification est utilisé pour décider s'il convient d'accomplir l'établissement de la connexion.
